# EUROPEAN PATENT SPECIFICATION

(11) **EP 3 490 834 B1**
(45) Date of publication and mention of the grant of the patent: **09.09.2020**
(21) Application number: 17749668.4
(22) Date of filing: 27.07.2017
(51) Int. Cl.: B60K 15/035, F16K 17/36

(54) **VALVE DEVICE FOR VENTILATING AND/OR VENTING A TANK FOR A MOTOR VEHICLE, AS WELL AS TANK SYSTEM FOR A MOTOR VEHICLE**
VENTILVORRICHTUNG ZUR BELÜFTUNG UND/ODER ENTLÜFTUNG EINES TANKS FÜR EIN KRAFTFAHRZEUG SOWIE TANKSYSTEM FÜR EIN KRAFTFAHRZEUG
DISPOSITIF DE TYPE SOUPAPE POUR VENTILER ET/OU AÉRER UN RÉSERVOIR POUR UN VÉHICULE À MOTEUR, AINSI QUE SYSTÈME DE RÉSERVOIR POUR UN VÉHICULE À MOTEUR

(30) Priority: 28.07.2016 DE 102016009263
(43) Date of publication of application: 05.06.2019
(73) Proprietor: Plastic Omnium Advanced Innovation and Research, 1130 Bruxelles (BE)
(72) Inventor: BRAND, Volker, 70435 Stuttgart (DE); KÖNIG, Michael, 70794 Filderstadt (DE); HEIMBRODT, Klaus-Jürgen, 74389 Cleebronn (DE); SCHAASER, Harald, 74321 Bietigheim-Bissingen (DE); KERN, Wolfgang, 36124 Eichenzell (DE)
(74) Representative: LLR
(86) International application number: PCT/EP2017/068995
(87) International publication number: WO 2018/019933

(56) References cited:
- WO-A1-01/07806
- DE-A1- 3 205 782
- US-A- 4 552 175
- US-B1- 6 884 349

## Description

The invention relates to a valve device for ventilating and/or venting a tank for a motor vehicle according to the preamble of claim 1, as well as a tank system for a motor vehicle.

Such a valve device for the ventilating and/or venting of a tank designed for receiving fuel, in particular liquid fuel, for a motor vehicle is, for example, already known from US 5,666,989. The valve device has at least one ventilation opening, via which the tank is to be vented and/or ventilated. In other words, the tank may be ventilated and/or vented via the ventilation opening. The ventilating of the tank is understood to mean that air, for example from the environment, may flow into the tank via the ventilation opening, in order to avoid, for example, excessive negative pressure in the tank. The venting of the tank is understood to mean that a gas comprising, for example, volatile fuel components may be discharged from the tank via the ventilation opening and may thus flow out, thereby avoiding an excessive overpressure in the tank.

The valve device has a valve seat associated with the ventilation opening and a valve ball which is movable between a closed position blocking the ventilation opening and at least one open position which at least partially opens the ventilation opening. In the closed position, the valve ball rests on the corresponding valve seat, as a result of which the ventilation opening is blocked. As a result, no gas or air may flow through the ventilation opening. Since the valve ball releases the ventilation opening in the open position, the previously mentioned gas or the previously mentioned air may flow through the ventilation opening in the open position. The valve ball thereby rolls out of the closed position into the open position as a result of movements of the valve device. In other words, when the valve device is, for example, dynamically moved, the valve ball rolls on at least a part of the valve seat, such that the valve ball at least partially opens the ventilation opening. Such movements of the valve device are, for example, caused by travel of the motor vehicle. In particular, such a movement of the valve device occurs during such travel of the motor vehicle, wherein high transversal and/or longitudinal accelerations act on the motor vehicle and thus on the valve device, in particular on the valve ball. As a result of these longitudinal and/or transversal accelerations, the valve ball may roll down on at least a part of the valve seat and thus roll into the open position in order to ensure ventilation and/or venting of the tank during movement of the car.

Furthermore, DE 40 14 551 C1 discloses a venting valve for fuel filters, with a venting bore arranged approximately at the highest point of the filter interior of the fuel filter. A valve seat is provided in the venting valve, in a part of which, remote from the latter, lies a low-density valve element, of such a low density that it rests on the valve seat in a floating condition when the fuel level rises in the interior of the venting valve.

In addition, a pressure control device for a fuel tank is known from DE 44 00 450 A1, with a fuel tank for storing fuel, a fuel pump and a fuel vapor storage device for storing fuel vapors. An arrangement of fuel tanks for vehicle is also known from US 4 552 175 A, disclosing three tanks and non-return valves devices.

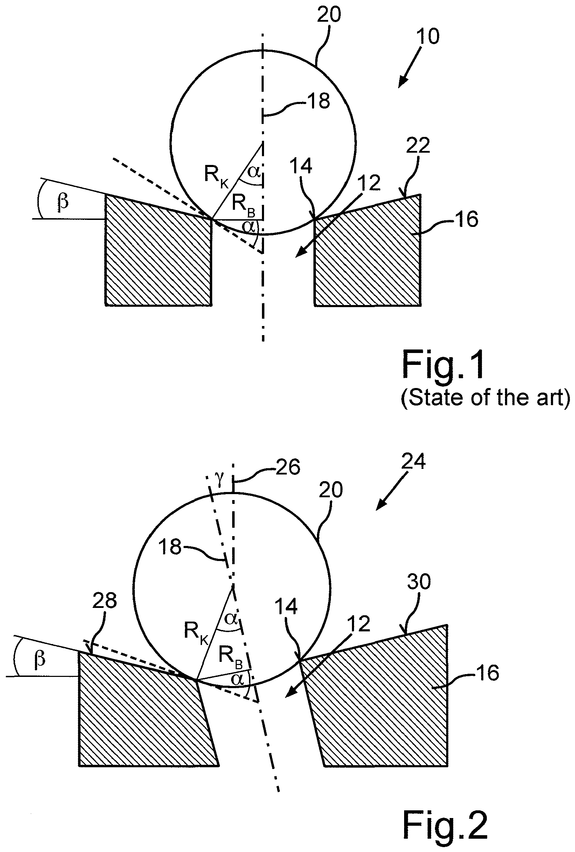

A valve device according to the prior art is also illustrated in Fig. 1. Fig. 1 shows a schematic sectional view of the valve device, denoted by 10 as a whole. The valve device 10 according to the prior art is designed, for example, as a pressure-sustaining valve and is used in a ventilating or venting system by means of which a tank may be ventilated and/or vented. The tank has at least one receiving space in which a fuel, in particular a liquid fuel, may be accommodated for operating an internal combustion engine. The internal combustion engine is, in this case, a component of a motor vehicle which may be driven by means of the internal combustion engine. The pressure-sustaining valve is used, in particular, in order to avoid overfilling the tank. Such overfilling, it is to be understood to mean that an excessively large amount is filled into the tank, in particular in its receiving space.

In this case, the valve device 10 comprises the ventilation opening, which is designated as 12 in Fig. 1, and via which the tank is to be vented and/or ventilated. Furthermore, the valve device 10 comprises the valve seat mentioned above and designated by 14 in Fig. 1, which is formed, for example, by a housing 16 of the valve device 10. In particular, the valve seat 14 is formed by a wall, in particular of the housing 16, wherein the wall opening forming the valve seat 14 is at least partially limited by the ventilation opening 12. The ventilation opening 12 is designed, for example, as a through-opening. The ventilation opening 12 is also referred to as a bore, but whereas the ventilation opening 12 may in fact be designed as a bore, it does not necessarily have to be designed as a bore. The ventilation opening 12 has, in this case, a substantially circular cross-section and is formed to be rotationally symmetrical with respect to its central axis 18.

Furthermore, the valve device 10 comprises the valve ball mentioned above and denoted by 20 in Fig. 1. The valve ball 20 is a valve element by means of which the ventilation opening 12 may be blocked and released. Since the valve ball 20 is used as the valve element, the valve device 10 is designed as a ball-pressure-sustaining valve. If the motor vehicle is, for example, standing on a plane via its wheels, the center axis 18 runs perpendicular to this plane, for example a plane formed by a roadway. If the plane runs at least substantially horizontally, the central axis 18 coincides with the vertical. In this case, the valve seat 14 is arranged in a plane which, in the installation position of the valve device 10, is at right angles to the vertical and thus, for example, at least substantially parallel to the horizontal plane. The valve device 10 thereby assumes its installation position in the completely assembled state of the motor vehicle and, in particular, when the motor vehicle is supported via its wheels on at least a substantially horizontal plane. R_{K} denotes the radius of the valve ball 20, whereas R_{B} denotes half the diameter and thus the radius of the ventilation opening 12.

The valve ball 20 is movable between a closed position shown in Fig. 1 and at least one open position relative to the housing 16. In the closed position, the valve ball 20 rests on the valve seat 14, wherein the ventilation opening 12 is blocked by means of the valve ball 20. In the open position, the valve ball 20 at least partly opens the ventilation opening 12. The valve ball 20 may thereby roll out of the closed position into the open position as a result of movements of the valve device 10. In the event of an inclined position indicated by an angle α being exceeded, or a corresponding transversal and/or longitudinal acceleration of the motor vehicle, the valve ball 20 rolls from the closed position into the open position and thus at least partially downwards from the valve seat 14. The valve seat 14 is connected to a cone 22, which is formed, for example, by the housing 16.

Below an inclined position of the cone 22, indicated by an angle β, or below a corresponding transversal and/or longitudinal acceleration, the valve ball 20 rolls back again onto the valve seat 14 and thus into the closed position. The closed position is a refueling position in which the aforementioned tank overfilling may be prevented. The angle β may be adapted or selected as required.

With regard to the angle α, it is desirable to keep the angle α as small as possible, in order to be able to keep the pressure prevailing in the tank particularly low. In order to keep the angle α or the inclined position designated by the angle α as small as possible, a large diameter of the valve ball 20 and a small diameter of the ventilation opening 12 are desirable. A small diameter of the ventilation opening 12, however, is disadvantageous in terms of pressure loss or of resistance of an operating ventilation and/or venting system which is used to vent the tank during operation, i.e. during travel of the motor vehicle. An excessively small diameter of the ventilation opening 12 thus leads to an undesirably high pressure loss or an undesirably high resistance during the operating ventilation and/or venting, so that the diameter of the ventilation opening 12 is conventionally chosen to be particularly large in order to keep the pressure loss, and thus the pressure prevailing in the tank, low.

However, a high space requirement of the valve ball 20 and thus of the valve device 10 as a whole results from having a large diameter of the valve ball 20, which results in that the valve device 10 may then be very difficult to install, or no longer possible to install. Furthermore, in addition to a large diameter of the valve ball 20, a low density of the valve ball 20 is desirable, so that the opening pressure of the valve ball 20 may be kept low or a change in the opening pressure may be avoided. The opening pressure is understood to mean the pressure at which the valve ball 20 opens, i.e. is moved down from its valve seat 14. The valve ball 20 is usually formed from a metallic material, in particular from a steel, so that the cost of the valve ball 20 may be kept particularly low. However, materials which have a lower density than steel would lead to high production costs for the valve ball 20. Such a material is, for example, plastic or glass.

Conventional ball pressure-sustaining valves are the best compromise in terms of the space required, the opening pressure and the cost. A disadvantage of this is the resulting large angle α, which does not allow the valve ball 20 to be rolled away from the valve seat 14 when stationary or at only slight transversal and/or longitudinal accelerations. Thereby, the tank is pressurized until the valve ball 20 is moved, particularly depressed, by the valve seat 14 due to the pressure prevailing in the tank. However, it is desirable to obtain a pressure which is as low as possible in the tank in order to make the design of the tank, or of the tank system as a whole, controllable with regard to strength.

It is therefore an object of the present invention to further develop a valve device and a tank system of the type mentioned at the outset, in such a way that an improved function of the valve device may be achieved.

This object is achieved by a valve device having the features of patent claim 1 and by a tank system having the features of patent claim 5. Advantageous embodiments with suitable further developments of the invention are defined in the remaining claims.

In order to further develop a valve device of the type indicated in the preamble of patent claim 1 in such a way that an improved function of the valve device may be achieved, it is provided according to the invention that the valve seat is arranged in a plane which runs obliquely to the vertical in the installation position of the valve device. In this case, the valve device assumes its installation position in the completely assembled state of the motor vehicle, which is designed, for example, as a motor vehicle, in particular as an automobile, and in particular when the motor vehicle is positioned via its wheels on an at least a substantially horizontal plane. If, for example, the motor vehicle is located on a horizontal plane via its wheels, the plane in which the valve seat is arranged extends obliquely with respect to the horizontal plane and thus obliquely with respect to the horizontal and obliquely with respect to the vertical. In particular, it is conceivable for the plane in which the valve seat is arranged. to extend obliquely to the vehicle direction of the vehicle, wherein, for example, the vehicle direction coincides with the vertical, in particular when the motor vehicle is on a horizontal plane.

According to the invention, since the valve seat is inclined at an angle with respect to the vertical and thus runs at an angle with respect to the vertical, a preferred rolling direction in which the valve ball rolls into the open position from the closed position as a result of movements of the valve device, may be adjusted to suit the requirements, and in particular may be adjusted depending on the circumstances, so that, particularly in the case of accelerations, particularly longitudinal and/or transversal accelerations, of the motor vehicle, a particularly early rolling of the valve ball from the closed position into the open position may be achieved. As a result, a pressure prevailing in the tank may be kept particularly low, so that particularly efficient operation of a tank system of the motor vehicle comprising the tank may be achieved.

Due to the design of the valve seat according to the invention, the space requirement, the weight and the cost of the valve device may be kept low, whereby a particularly low opening pressure may be obtained at the same time as the valve ball is moved from the valve seat and thus from the closed position into the open position. The opening pressure is, for example, a pressure prevailing in the tank. Furthermore, the valve ball may be moved from the valve seat even with small accelerations acting on the valve ball and resulting, for example, from transversal and/or longitudinal accelerations of the motor vehicle, so that the pressure prevailing in the tank may be kept particularly low.

Furthermore, the design of the valve seat may be so implemented that, for example, the valve ball rolls off the valve seat in the case of inclinations of the motor vehicle, especially when the latter is parked, and thus moves into the open position. As a result, the ventilation opening and thus, for example, an operating vent, are opened, so that, for example, the tank may be non-pressurized during storage. A non-pressurized tank is understood to mean that, upon parking, the valve ball rolls off the valve seat, and the ventilation opening 12 is opened so that the tank may be, in particular may always be, vented via the venting opening. Thereby, the generation of an excessive overpressure in the tank may be definitely avoided. This makes it possible, for example, to carry out an on-board leak diagnosis via the operating venting. Furthermore, it is possible to use, as the valve ball, a valve ball which is usually used in valve devices and which is formed from the same material as the valve balls of conventional valve devices and has the same diameter as the valve balls of conventional valve devices. Thus, the valve ball may be formed, for example, from a metallic material, in particular from a steel, so that the cost of the valve ball may be kept particularly low.

The invention also relates to a tank system for a motor vehicle, which is designed, for example, in particular as an automobile, with a tank for receiving fuel, in particular for receiving liquid fuel, and including at least one valve device according to the invention. Advantageous and preferable configurations of the valve device according to the invention are to be regarded as advantageous and preferable embodiments of the fuel system according to the invention and vice versa.

Further advantages, features and details of the invention may be gathered from the following description of a preferred exemplary embodiment as well as from the drawing. The features and feature combinations as described above in the description, as well as the features and feature combinations listed below in the description of the figures and/or in the figures alone, may be used not only in the respectively indicated combination but also in other combinations or individually without departing from the scope of the invention.

In the drawings:
- Fig. 1: shows a schematic sectional view of a valve device for ventilating and/or venting a fuel tank for a motor vehicle according to the prior art; and
- Fig. 2: shows a schematic sectional view of a valve device according to the invention, the valve seat of which is arranged in a plane which runs obliquely with respect to the vertical in the installation position of the valve device.

In the figures, identical or functionally identical elements are provided with the same reference numbers.

Fig. 1 shows a valve device 10 according to the prior art, and Fig. 2 shows a valve device 24 which has an improved function in comparison with the valve device 10. In general, however, the function of the valve device 24, in particular relating to a ventilating and/or venting of a tank of a motor vehicle designed to receive fuel, in particular a liquid fuel, corresponds to the function of the valve device 10. The motor vehicle is, for example, in particular an automobile, which may be powered by means of an internal combustion engine. In this case, the internal combustion engine may be operated with the fuel which may be received in the tank. The valve device 24 is used to ventilate and/or vent the tank.

The valve device 24 has a ventilation opening 12, via which the tank may be ventilated and/or vented. The ventilation of the tank is understood to mean that air, in particular from the environment, may flow into the tank via the ventilation opening 12 - when this is opened - to avoid an excessive negative pressure in the tank. The venting of the tank is understood to mean that a gas may be removed from the tank via the ventilation opening 12 - when this is opened - in order to avoid an excessive overpressure in the tank. The gas which may collect in the tank is formed, for example, from the volatile fuel contained in the tank and may, in particular, comprise fuel components. The ventilation opening 12 is designed as a through-opening for example. The ventilation opening 12 may be designed as a bore or be formed as a bore. For example, the ventilation opening 12 has a central axis 18, about which the ventilation opening 12 is rotationally symmetrical. Furthermore, the ventilation opening 12 has, for example, a cross-section which is at least essentially circular, and which may be traversed by the gas or the air. The tank is, for example, part of a tank system, by means of which the fuel may be stored and, for example, the internal combustion engine may be supplied with the fuel.

The valve device 24 also has a valve seat 14 associated with the ventilation opening 12. The ventilation opening 12 is formed, for example, by a housing 16 of the valve device 10 or extends in the housing 16. The valve seat 14 is thereby formed, for example, by the housing 16, in particular by a wall of the housing 16; wherein at least a longitudinal section of the ventilation opening 12 is limited by the wall.

Furthermore, the valve device 24 comprises a valve ball 20 which is associated with the ventilation opening 12 and the valve seat 14 and is movable between a closed position shown in Fig. 2 to fluidically block the ventilation opening 12, and at least one open position. In the closed position, the valve ball 20 rests on the associated valve seat 14, as a result of which the ventilation opening 12 is blocked. As a result, no gas or air may flow through the ventilation opening 12. In the open position, however, the valve ball 20 at least partly releases the ventilation opening 12 so that the gas or the air may then flow through the ventilation opening 12.

As a result of movements of the valve device 24, the valve ball 20 may roll from the closed position into the open position and thereby at least partly roll off the valve seat 14. These movements of the valve device 24 occur in particular as a result of movements of the motor vehicle as a whole. As a result of the movements of the motor vehicle, longitudinal and/or transversal accelerations act on the motor vehicle, for example. Accelerations which act on the valve device 24 and, in particular, on the valve ball 20 result from these longitudinal and/or transversal accelerations. As a result of these accelerations acting on the valve ball 20, the valve ball 20 is, for example, rolled off the valve seat 14 and thus moved into the open position. In this way, for example, operating ventilating and/or venting may be implemented, so that the tank may be ventilated and/or vented during operation and thus, in particular, during move of the motor vehicle.

In order now to achieve a function of the valve device 24, which is improved compared to the valve device 10, the valve seat 14 is arranged in a plane which runs obliquely with respect to the vertical in the installation position of the valve device 24. The valve device 24 thereby assumes its installation position in the completely assembled state of the motor vehicle and in particular when the motor vehicle is supported via its wheels on a plane which is at least substantially horizontal and is formed, for example, by a roadway. Then the plane in which the valve seat 14 is arranged runs obliquely with respect to the vertical 26 and obliquely with respect to the horizontal plane, which plane is normal to the vertical 26. The center axis 18 runs at right angles to the plane in which the valve seat 14 is arranged so that the central axis 18 is normal to the plane in which the valve seat 14 is arranged. It may be seen from Fig. 2 that the valve seat 14 is inclined at an angle γ with respect to the vertical 26.

In this case, the ventilation opening 12 also runs obliquely to the vertical 26 in the installation position, wherein the center axis 18 is at an angle γ to the vertical line 26.

As a result of this oblique course of the valve seat 14, the valve ball 20 may roll much earlier from the valve seat 14, in particular with the same ball diameter/bore diameter ratio than in the case of the valve device 10, so that the pressure prevailing in the tank may be kept particularly low.

A first surface 28 adjoins the valve seat 14 on a first side, while a second surface 30 adjoins the valve seat 14 on a second side opposite the first side. In this case, the surfaces 28 and 30 extend obliquely to the vertical 26 in the installation position, wherein the respective surface 28 or 30 is formed, for example, by a cone. The term cone is used here only by way of example and the surfaces 28 and 30 may also be formed by means of a truncated cone, a paraboloid or an ellipsoid. In this case, the respective cone may alternatively also be designed, for example, as a free-form surface.

With respect to the installation position, the surface 28 or the cone forming the surface 28 is at an angle β with respect to the horizontal, wherein the angle β allows the valve ball 20 to roll back into or onto the valve seat 14 when the motor vehicle is stationary on a plane that is at least substantially horizontal.

Due to the oblique arrangement of the valve seat 14, the latter is oblique with respect to the vertical. The direction of this inclination determines a preferred rolling direction in which the valve ball 20 may roll down from the valve seat 14. This rolling direction may be adjusted in accordance with the requirements and may , for example, be selected according to the circumstances. As a result, it is, for example, possible to implement an early rolling of the valve ball 20 from the closed position into the open position during accelerations. Furthermore, an early rolling in another direction may be implemented, for example, in order to open the previously described operating venting or ventilation opening 12 when the motor vehicle is parked, and thus obtain a non-pressurized tank. This allows on-board leak diagnosis to be implemented via the operating venting.

Furthermore, it is conceivable for the valve seat 14 to be designed asymmetrically with respect to the vertical 26 and/or the central axis 18. Such an asymmetrical design of the valve seat 14 may be achieved simply by forming the surface 28, or the cone forming the surface 28, at an angle β symmetrically with respect to the horizontal, thus also symmetrically with respect to the vertical 26, while the ventilation opening 12 is formed obliquely with respect to the vertical 26, wherein the center axis 18 of the ventilation opening 12 is at an angle γ to the vertical 26.

Thus, in the circumferential direction of the valve seat, different angles arise between the surface 28 which forms the valve seat 14 and the ventilation opening 12, which, according to the section in Fig. 2 lie in the range from 90° - β - y to 90° - β + y.

Due to the changing angle between the surface 28 and the ventilation opening 12, the valve seat 14 is designed asymmetrically with respect to the vertical.

In particular, it is possible, by the oblique arrangement of the valve seat 14, to keep the pressure prevailing in the tank particularly low, so that the effort required for the strength design of the tank or the tank system may be kept low.

Furthermore, particularly low tank pressures may be achieved during the operating ventilation and thus during dynamic ventilation of the tank since the valve ball 20 already rolls off the valve seat 14 at low accelerations. In addition, particularly low tank pressures may be achieved in a preferred direction in the case of static venting, for example, to enable on-board leak diagnosis of the tank via the operating venting, so that additional effort for achieving a leak diagnosis of the tank may be avoided. Furthermore, the costs may be kept particularly low because the use of shut-off valves for closing the operating ventilation during refueling may be dispensed with. Such shut-off valves are more expensive than ball-pressure-sustaining valves, but are always open independently of the acceleration during the operation of the motor vehicle. Moreover, the cost may be kept particularly low since a ball-pressure-sustaining valve with a valve ball 20 designed as a steel ball may be used as the valve device. As a result, the use of weight-saving, but cost-intensive materials for the valve ball 20, may be avoided.

### Reference numerals and factors

- 10: Valve device
- 12: Ventilation opening
- 14: Valve seat
- 16: Housing
- 18: Center axis
- 20: Valve ball
- 22: Cone
- 24: Valve device
- 26: Vertical
- 28: Surface
- 30: Surface
- α: Angle
- β: Angle
- γ: Angle
- R_{B}: Radius
- R_{K}: Radius

## Claims

1. Valve device (24) for ventilating and/or venting a tank for a motor vehicle, comprising at least one ventilation opening (12), via which the tank is to be ventilated and/or vented, with a valve seat (14) arranged at the ventilation opening (12) and with a valve ball (20), which is movable between a closed position in which it blocks the ventilation opening (12), wherein the valve ball (20) is seated on the valve seat (14), and at least one open position, which at least partially opens the ventilation opening (12) and, due to movements of the valve device (24), rolls from the closed position into the open position,
**characterized in that**
the valve seat (14) is arranged in a plane which runs obliquely with respect to the vertical (26) in the installation position of the valve device (24).

2. Valve device (24) according to claim 1,
**characterized in that**
the ventilation opening (12) extends obliquely with respect to the vertical (26) in the installation position.

3. The valve device as claimed in claim 1 or claim 2,
**characterized in that**
the valve seat (14) adjoins at least one surface (28, 30) which extends obliquely in relation to the vertical (26) in the installation position.

4. Valve device according to claim 3,
**characterized in that**
that the surface (28, 30) is formed as a cone, a truncated cone, a paraboloid or an ellipsoid.

5. Valve device according to claim 4,
**characterized in that**
the cone or truncated cone, which forms the surface (28, 30), is designed as a straight circular cone, straight circular truncated cone, straight paraboloid or vertical ellipsoid.

6. Valve device according to claim 5,
**characterized in that**
the angle γ between the central axis of the straight circular cone or straight circular truncated cone and the central axis 18 of the ventilation opening 12 is not equal to zero.

7. Tank for a motor vehicle, having at least one valve device (24) according to one of the preceding claims, which is formed to receive fuel.

8. Tank system for a motor vehicle, having a tank for receiving fuel, and having at least one valve device (24) according to one of the preceding claims.

## Patentansprüche

1. Ventileinrichtung (24) zum Be- und/oder Entlüften eines Tanks für ein Kraftfahrzeug, mit wenigstens einer Lüftungsöffnung (12), über welche der Tank zu entlüften und/oder zu belüften ist, mit einem der Lüftungsöffnung (12) zugeordneten Ventilsitz (14), und mit einer Ventilkugel (20), welche zwischen einer die Lüftungsöffnung (12) versperrenden Schließstellung, in welcher die Ventilkugel (20) auf dem Ventilsitz (14) sitzt, und wenigstens einer die Lüftungsöffnung (12) zumindest teilweise freigebenden Offenstellung bewegbar ist und infolge von Bewegungen der Ventileinrichtung (24) aus der Schließstellung in die Offenstellung rollt, **dadurch gekennzeichnet, dass** der Ventilsitz (14) in einer Ebene angeordnet ist, welche in Einbaulage der Ventileinrichtung (24) schräg zur Senkrechten (26) verläuft.

2. Ventileinrichtung (24) nach Anspruch 1, **dadurch gekennzeichnet, dass** die Lüftungsöffnung (12) in der Einbaulage schräg zur Senkrechten (26) verläuft.

3. Ventileinrichtung (24) nach Anspruch 1 oder 2, **dadurch gekennzeichnet, dass** sich an den Ventilsitz (14) wenigstens eine Fläche (28, 30) anschließt, welche in der Einbaulage schräg zur Senkrechten (26) erstreckt.

4. Ventileinrichtung (24) nach Anspruch 3, **dadurch gekennzeichnet, dass** die Fläche (28, 30) durch einen Kegel, Kegelstumpf, Paraboloid oder Ellipsoid gebildet ist.

5. Ventileinrichtung (24) nach Anspruch 4, **dadurch gekennzeichnet, dass** der Kegel oder Kegelstumpf, der die Fläche (28, 30) bildet, als gerader Kreiskegel, gerader Kreiskegelstumpf, gerader Paraboloid oder senkrechter Ellipsoid ausgebildet ist.

6. Ventileinrichtung (24) nach Anspruch 5, **dadurch gekennzeichnet, dass** die ein Winkel γ zwischen der Mittelsenkrechten des geraden Kreiskegels oder geraden Kreiskegelstumpfs und der Mittelachse (18) der Lüftungsöffnung (12) ungleich null ist.

7. Tank für ein Kraftfahrzeug, mit wenigstens einer Ventileinrichtung (24) nach einem der vorhergehenden Ansprüche, welcher zum Aufnehmen von Kraftstoff ausgebildet ist.

8. Tankanlage für ein Kraftfahrzeug, mit einem Tank zum Aufnehmen von Kraftstoff, und mit wenigstens einer Ventileinrichtung (24) nach einem der vorhergehenden Ansprüche.

## Revendications

1. Dispositif de soupape (24) pour ventiler et / ou purger un réservoir pour véhicule à moteur, comprenant au moins une ouverture de ventilation (12), par laquelle le réservoir doit être ventilé et / ou purgé, avec un siège de soupape (14) disposé à l'ouverture de ventilation (12) et avec une bille de soupape (20), qui est mobile entre une position fermée dans laquelle elle bloque l'ouverture de ventilation (12), dans laquelle la bille de soupape (20) est assise sur le siège de soupape (14), et au moins une position ouverte, qui ouvre au moins partiellement l'ouverture de ventilation (12) et, en raison des mouvements du dispositif de soupape (24), roule de la position fermée à la position ouverte, **caractérisée en ce que** le siège de soupape (14) est disposé dans un plan qui s'étend obliquement par rapport à la verticale (26) dans la position d'installation du dispositif de soupape (24).

2. Dispositif de soupape (24) selon la revendication 1, **caractérisé en ce que** l'ouverture de ventilation (12) s'étend obliquement par rapport à la verticale (26) en position d'installation.

3. Dispositif de soupape selon la revendication 1 ou la revendication 2, **caractérisé en ce que** le siège de soupape (14) jouxte au moins une surface (28, 30) qui s'étend obliquement par rapport à la verticale (26) dans la position d'installation.

4. Dispositif de soupape selon la revendication 3, **caractérisé en ce que** la surface (28, 30) est réalisée sous forme de cône, de cône tronqué, de paraboloïde ou d'ellipsoïde.

5. Dispositif de soupape selon la revendication 4, **caractérisé en ce que** le cône ou cône tronqué, qui forme la surface (28, 30), est conçu comme un cône circulaire droit, un cône tronqué circulaire droit, un paraboloïde droit ou un ellipsoïde vertical.

6. Dispositif de soupape selon la revendication 5, **caractérisé en ce que** l'angle γ entre l'axe central du cône circulaire droit ou cône tronqué circulaire droit et l'axe central (18) de l'ouverture de ventilation (12) n'est pas égal à zéro.

7. Réservoir pour véhicule automobile, ayant au moins un dispositif de soupape (24) selon l'une des revendications précédentes, qui est formé pour recevoir du carburant.

8. Système de réservoir pour véhicule automobile, ayant un réservoir pour recevoir du carburant, et ayant au moins un dispositif de soupape (24) selon l'une des revendications précédentes.
